# EUROPÄISCHE PATENTSCHRIFT

(11) **EP 2 542 325 B1**
(45) Veröffentlichungstag und Bekanntmachung des Hinweises auf die Patenterteilung: **14.05.2014**
(21) Anmeldenummer: 11706568.0
(22) Anmeldetag: 01.03.2011
(51) Int. Cl.: B01D 45/12, B04C 3/04, B04C 3/06, F01M 13/04, B04C 5/04

(54) **ÖLNEBELABSCHEIDER MIT WENIGSTENS EINEM ZYKLON**
OIL MIST SEPARATOR COMPRISING AT LEAST ONE CYCLONE
SÉPARATEUR DE BROUILLARD D'HUILE AVEC AU MOINS UN FILTRE CENTRIFUGE

(30) Priorität: 01.03.2010 DE 102010009722
(43) Veröffentlichungstag der Anmeldung: 09.01.2013
(73) Patentinhaber: Hengst SE & Co. KG, 48147 Münster (DE)
(72) Erfinder: PIETSCHNER, Sieghard, 48268 Greven (DE)
(74) Vertreter: Linnemann, Winfried
(86) Internationale Anmeldenummer: PCT/EP2011/053048
(87) Internationale Veröffentlichungsnummer: WO 2011/107485

(56) Entgegenhaltungen:
- EP-A2- 1 555 399
- EP-A2- 1 614 871
- DE-A1-102005 061 256
- DE-U1- 20 300 596
- US-A1- 2002 112 998

## Beschreibung

Die vorliegende Erfindung betrifft einen Ölnebelabscheider für das Kurbelgehäuseentlüftungsgas einer Brennkraftmaschine, insbesondere eines Kraftfahrzeuges, wobei der Ölnebelabscheider wenigstens einen Zyklon aufweist, der aus einem Zyklonkörper mit einem Oberteil mit einem zylindrischen Inneren und mit einem Unterteil mit einem konischen Inneren und aus einem das Oberteil abdeckenden Deckelteil besteht, wobei in dem Oberteil ein Gaseinlass vorgesehen ist, wobei durch den Deckelteil ein Gasauslass verläuft, wobei der Gaseinlass als mindestens ein zur Oberseite des Oberteils hin offener und oberseitig durch den Deckelteil begrenzter, tangential zu einer inneren Oberfläche des Oberteils in dieses einmündender, durch eine Umfangswand des Oberteils geführter Schlitz ausgebildet ist und wobei eine von einer Mittelachse des Oberteils ausgehende gedachte Radiuslinie unter jedem Umfangswinkel, auch im Bereich des/jedes Schlitzes, immer auf die Umfangswand trifft.

Das Dokument EP 1 614 871 A2 offenbart einen Ölabscheider für Kurbelgehäusegase mit einer Vielzahl von parallel und stehend angeordneten Zyklonen, die jeweils ein Deckelteil mit Gasaustritt, einen zylindrischen Bereich mit tangentialem Einlass und einem konischen Teil aufweisen, wobei der konische Teil über einen Ölauslass verfügt, der in einen gemeinsamen Sammelraum mündet. Dabei weist der tangentiale Einlass eine längliche Form, d.h. Schlitzform, auf, verläuft in seiner gesamten Länge im zylindrischen Oberteil und ist nach oben nicht abgeschlossen, sondern offen ausgebildet, wobei der Abschluss und Deckel durch eine horizontale Gehäusewandung gebildet wird. Diese Wandung dient als Deckel für die gesamte Gruppe von Zyklonen und weist einen Flansch auf, mittels welchem der Zyklonteil befestigt ist. Die tangentialen Einlässe verlaufen geradlinig durch die Umfangswand und weisen Verlängerungen auf, wobei eine Radiuslinie von der Mittelachse des Oberteils immer auf einen Teil der Umfangswandung trifft. Der Deckel weist für jeden Zyklon einen mittigen, als Tauchrohr ausgeführten Reingasauslass auf, der einen weiteren Rohrabschnitt zur Verbindung mit dem Reingaskanal hat.

Eine ähnliche Vorrichtung ist in dem Dokument EP 1 555 399 A2 offenbart. Hier ist der Zyklon liegend installiert und weist einen Ölauslass im konischen Teil sowie einen tangentialen Einlass auf. Der Zyklon ist zwischen zwei Wänden im Gehäuse angebracht, wobei die eine Wand einen flachen Deckel für den Zyklon bildet. Der Einlass weist eine längliche Form, d.h. Schlitzform, auf und hat keinen oberen Abschluss, so dass er zum Deckel hin offen ausgebildet ist. Der Deckel weist einen zentralen Gasaustritt mit Tauchrohr auf und der Zyklonkörper muss gasdicht zwischen den beiden Wänden befestigt sein.

Bekanntermaßen werden Ölnebelabscheider der vorstehend beschriebenen Art oft in ein Ölmodul oder eine Zylinderkopfhaube oder eine andere Komponente, wie das Kurbelgehäuse, einer zugehörigen Brennkraftmaschine eingebaut. Der bei modernen Kraftfahrzeugen zur Verfügung stehende Bauraum im Motorraum ist durch die Integration einer Vielzahl von verschiedenen Zusatzaggregaten stark eingeschränkt. Das führt dazu, dass häufig nicht die für die Funktion des Ölnebelabscheiders optimale Stelle gewählt werden kann, sondern der Ölnebelabscheider dort angeordnet werden muss, wo dies der Bauraum zulässt. Daraus resultieren Funktionsprobleme sowohl hinsichtlich der Feinölabscheidewirksamkeit infolge gestörter Wirbelbildung als auch hinsichtlich der Grobölabscheidefunktion. Spritzöl- und/oder Grobölbewurf und undefinierte Anströmsituationen, z. B. Gaswirbel oder -strahlen, werden durch die drehenden Teile im Kurbelgehäuse oder in den Ventilhauben erzeugt. Je nach Bauraumlage und Einbausituation kann die Wirbelbildung des Zyklons durch die undefinierte Anströmsituation oder undefinierte Strömungsstrahlsituation beeinträchtigt werden. Gleiches gilt bei einem, z.B. durch eine ungünstige Bauraumlage bedingten, erhöhten Groböl oder Spritzölbewurf, wobei hiermit nicht der eigentliche Ölnebel gemeint ist, sondern Öl in Form von Ölschwall, Spritzöl, Ölschläge usw., für die Ölnebelabscheider in der Regel nicht ausgelegt sind.

Für die vorliegende Erfindung stellt sich daher die Aufgabe, einen Ölnebelabscheider der eingangs genannten Art zu schaffen, bei dem eine gleichmäßige Anströmung des Eintrittsschlitzes bzw. der Eintrittsschlitze gewährleistet ist und bei dem der direkte Eintritt von Schwallöl oder größeren Öltropfen verhindert wird.

Die Lösung dieser Aufgabe gelingt erfindungsgemäß mit einem Ölnebelabscheider der eingangs genannten Art, der dadurch gekennzeichnet ist, dass der Deckelteil mit einer sich über zumindest einen Teil der Höhe des Oberteils unter Ausbildung eines Ringspalts erstreckenden Kappe ausgeführt ist und dass die Kappe sich in Axialrichtung gesehen mindestens so weit erstreckt, dass sie den/jeden Gaseinlass vollständig überdeckt, wobei zu entölendes Kurbelgehäuseentlüftungsgas von außerhalb des Zyklonkörpers durch den Ringspalt zu dem mindestens einen Schlitz strömen kann.

Vorteilhaft wird durch die vollständige Überdeckung des Einlassschlitzes durch die Kappe eine direkte radiale Strömung in den Zyklon hinein ausgeschlossen. Die Strömungsführung durch den Ringspalt axial zum Oberteil des Zyklons führt einerseits zu einer Vergleichmäßigung der Strömung und somit zur Verbesserung der Wirbelbildung und dient andererseits als Spritzschutz, so dass größere Öltropfen nicht direkt in den Gaseinlass des Zyklons gelangen können. Vorteilhaft ist der erfindungsgemäße Ölnebelabscheider zudem einfach und dadurch kostengünstig herstellbar, weil bei der Fertigung des Zyklonkörpers in einem Spritz- oder Druckgusswerkzeug kein Schieber für die Erzeugung des Gaseinlasses erforderlich ist. Eine gute Funktion des Ölnebelabscheiders mit einem hohen Wirkungsgrad wird auch dadurch gewährleistet, dass der Schlitz tangential zur inneren Oberfläche des Oberteils in dieses einmündet und dass eine von einer Mittelachse des Oberteils ausgehende gedachte Radiuslinie unter jedem Umfangswinkel, auch im Bereich des/jedes Schlitzes, immer auf die Umfangswand trifft. Richtungskomponenten im einströmenden Gasstrom, die die Wirbelausbildung im Zyklonkörper stören würden, können nicht auftreten. Die Energie des in den Zyklonkörper einströmenden Gasstroms wird im Zyklonkörper praktisch vollständig zur Erzeugung einer wirksamen Wirbelströmung genutzt, die nicht durch störende nichttangentiale Strömungskomponenten beeinträchtigt wird.

Um dabei im Ringspalt einen ausreichend großen Strömungsquerschnitt zur Verfügung zu stellen, weist zweckmäßig der Ringspalt in Radialrichtung gesehen eine mittlere Weite zwischen 0,5 und 2,0 mm auf.

Um einen Schlitz oder mehrere Schlitze zur Bildung des Gaseinlasses mit der gewünschten tangentialen Einmündungsrichtung und ausreichender Länge im Oberteil des Zyklonkörpers unterbringen zu können, ist bevorzugt vorgesehen, dass die Umfangswand in Radialrichtung des Oberteils gesehen eine Dicke aufweist, die mindestens so groß ist wie die Weite des Schlitzes.

Ein bei der bevorzugten Verwendung des erfindungsgemäßen Ölnebelabscheiders im Automotive-Bereich sinnvolles und realistisches Maß für die Umfangswanddicke ist 2 bis 3 mm und der Innendurchmesser des Zyklons beträgt dabei realistisch etwa 30 mm oder weniger, d.h. es geht hier insbesondere um Miniaturzyklone.

Zwecks Sicherstellung einer möglichst laminaren Strömung des in das Innere des Zyklons eintretenden Gasstroms wird vorgeschlagen, dass der/jeder Schlitz mit einer für eine ausreichende Gleichrichtung des Gasstroms ausreichenden Länge ausgeführt ist. Die konkrete Länge im Einzelfall richtet sich nach den äußeren Vorgaben, unter denen der Zyklon betrieben wird, und kann durch Berechungen und/oder Versuche passend festgelegt werden.

Eine weitere Maßnahme zur Erzeugung einer wirksamen Wirbelströmung im Inneren des Zyklonkörpers besteht darin, dass vorzugsweise das Verhältnis einer/der Länge des Schlitzes zu einer/der Weite des Schlitzes größer als 1,5 ist. Auf diese Weise wird eine gute Führung der Gasströmung sichergestellt. Dabei kann das Verhältnis in der Praxis beispielsweise auch im Bereich zwischen 3 und 6 liegen. Der Zyklonkörper kann als Gaseinlass ein oder mehrere Schlitze aufweisen; wenn nur ein Schlitz vorgesehen ist, ist ein größeres Verhältnis technisch vorteilhaft, während bei mehreren Schlitzen ein kleineres Verhältnis technisch günstiger ist.

Eine besonders günstige und fertigungstechnisch einfache Gestaltung ergibt sich, wenn der/jeder Schlitz über seine gesamte mittlere Länge in der Umfangswand verläuft. In dieser Ausführung kann die Umfangswand vorteilhaft über ihren gesamten Umfang mit konstanter Dicke und damit besonders einfach ausgeführt werden.

Eine weitere Maßnahme zur Gewährleistung günstiger Strömungsverhältnisse besteht darin, dass bevorzugt das Verhältnis einer/der Länge des Schlitzes zu einer/der Dicke der Umfangswand größer als 1,85 ist. Dabei liegt bevorzugt zugleich das oben schon angesprochene Länge/Weite-Verhältnis in einem Bereich von 1,5 bis 2.

In einer bevorzugten Ausführung ist vorgesehen, dass der/jeder Schlitz geradlinig durch die Umfangswand verläuft. Ein solcher Schlitz zeichnet sich durch einen geringen Strömungswiderstand aus.

Alternativ besteht die Möglichkeit, dass der/jeder Schlitz gebogen mit gleicher Krümmungsrichtung wie die Umfangswand durch diese verläuft. In dieser alternativen Ausführung kann bei gleicher Dicke der Umfangswand eine größere Schlitzlänge untergebracht werden als bei einem geradlinig verlaufenden Schlitz.

Für eine wirksame Erzeugung der Wirbelströmung im Zyklonkörper ist es vorteilhaft, wenn in der Umfangswand in deren Umfangsrichtung gesehen voneinander, vorzugsweise gleichmäßig, beabstandet zwei oder mehr, vorzugsweise bis zu sechs, Schlitze vorgesehen sind. Das Einströmen des Gases in den Zyklonkörper erfolgt hier an mehreren Stellen des Umfangs in bevorzugt gleichmäßigen Abständen, was eine besonders symmetrische Wirbelströmung ergibt und zu einem hohen Abscheidewirkungsgrad beiträgt. Hierdurch nimmt die Stabilität des Wirbels zu und die Störanfälligkeit nimmt ab. Bei mehreren über den Umfang verteilten Schlitzen müssen zudem an die Genauigkeit der Anordnung der Kappe am Deckelteil geringere Anforderungen erfüllt werden, weil eine leichte Exzentrizität der Kappe hier keine größeren Auswirkungen auf den gesamten Strömungswiderstand für das einströmende Gas hat, da sich die Effekte auf die mehreren Schlitze ausgleichen.

Eine weitere Ausgestaltung schlägt vor, dass im Deckelteil als Gasauslass eine zentrale Durchbrechung angeordnet ist. Damit liegt der Gasauslass symmetrisch im Zentrum des Deckelteils und damit auch vorteilhaft konzentrisch zu der Wirbelströmung im Zyklonkörper.

Eine weitere Maßnahme zur Gewährleistung eines hohen Wirkungsgrades des Ölnebelabscheiders besteht darin, dass vorteilhaft der Deckelteil mit einem in das Oberteil ragenden Tauchrohr als Gasauslass ausgeführt ist. Diese Ausführung ist insbesondere zweckmäßig, wenn durch den Gasauslass nur Reingas abgeführt werden soll.

Ebenfalls zum Zweck der Gewährleistung eines hohen Wirkungsgrades ist bevorzugt vorgesehen, dass der Gasauslass einen oberseitig am Deckelteil angeordneten Kragen oder Rohrabschnitt aufweist. Ein solcher Kragen oder Rohrabschnitt verhindert insbesondere einen Rückfluss von hinter dem Gasauslass noch abgeschiedenem Öl in das Innere des Zyklons.

Zwecks einfacher und schneller und dadurch kostengünstiger Fertigung des Ölnebelabscheiders wird vorgeschlagen, dass der Zyklonkörper und der Deckelteil zur gegenseitigen Verbindung miteinander verklipst oder verklebt oder verpresst oder verschweißt oder gegeneinander verspannt sind. Für das Verklipsen sind zweckmäßig am Zyklonkörper und am Deckelteil geeignete Klipselemente angeformt. Das Verkleben erfolgt zweckmäßig mittels eines zwischen den einander berührenden Bereichen von Zyklonkörper und Deckelteil angebrachten Klebstoffes. Ein gegenseitiges Verpressen wird vorzugsweise mittels eines Kraftschlusses zwischen den mit einander in Kontakt tretenden, auf Presspassung gefertigten Bereichen von Zyklonkörper und Deckelteil ermöglicht. Das Verschweißen erfolgt zweckmäßig so, dass im Bereich des Schlitzes oder der Schlitze die Schweißverbindung unterbrochen ist, um dort nicht durch eine Schweißraupe oder Schweißtropfen erzeugte Strömungsstörungen in dem in das Innere des Zyklons einströmenden Gasstrom zu verursachen. Auch ein punktförmiges Schweißen oder Anheften ist möglich. Schließlich können der Zyklonkörper und der Deckelteil ohne unmittelbare mechanische Verbindung miteinander gegeneinander verspannt sein, wobei auch weitere Teile des Ölnebelabscheiders oder eines den Ölnebelabscheider enthaltenden größeren Moduls, wie eine Zylinderkopfhaube, für das Verspannen genutzt werden können.

Zyklone als Teil eines Ölnebelabscheiders können in ihrem Betrieb unterschiedliche Ausrichtungen aufweisen. In einer ersten bevorzugten Ausführung ist der Zyklon stehend angeordnet und am unteren Ende des Unterteils ist eine Ölablauföffnung vorgesehen. In dieser Ausführung verlässt entöltes Gas den Zyklonkörper als Reingas durch den Gasauslass und aus dem Gas abgeschiedenes Öl verlässt den Zyklonkörper durch die Ölablauföffnung.

Für die Abscheidung von feinem Ölnebel aus dem Kurbelgehäuseentlüftungsgas einer Brennkraftmaschine haben sich Ölnebelabscheider mit mehreren kleinen Zyklonen anstelle eines größeren Zyklons als besonders geeignet erwiesen. Für den erfindungsgemäßen Ölnebelabscheider ist daher vorteilhaft vorgesehen, dass er mehrere parallelgeschaltete Zyklone umfasst und dass alle Ölablauföffnungen in einen gemeinsamen Ölsammelraum münden, der, vorzugsweise über einen Siphon oder ein Rückschlagventil, mit dem Kurbelgehäuse der Brennkraftmaschine verbunden ist.

In einer hinsichtlich der räumlichen Ausrichtung alternativen Ausführung ist vorgesehen, dass im Einbauzustand der Zyklon liegend angeordnet ist, dass wenigstens zwei Schlitze in der Umfangswand vorgesehen sind, wovon ein Schlitz an einer geodätisch tiefsten Stelle des liegenden Zyklons angeordnet ist, dass das Ende des Unterteils verschlossen ist, dass im Betrieb der Brennkraftmaschine Gas und im Zyklon agglomerierte Öltropfen durch den Gasauslass abführbar sind, dass dem Gasauslass des Zyklons eine Öltropfen abscheidende Struktur nachgeordnet ist und dass im Zyklon niedergeschlagenes Öl durch den geodätisch tiefsten Schlitz mittels Schwerkraftwirkung abführbar ist.

Bei dieser Ausführung des Ölnebelabscheiders werden innerhalb des Zyklons die mit dem Gasstrom eintretenden feinen Tröpfchen des Ölnebels zu größeren und schwereren Öltropfen agglomeriert, die dann mit dem Gasstrom den Zyklonkörper durch den Gasauslass verlassen. Das Abscheiden der größeren Tropfen aus dem Gasstrom hinter dem Zyklon erfolgt dann durch eine geeignete Struktur, die relativ einfach sein kann, beispielsweise ein Beruhigungsraum oder ein Gaskanal mit einer scharfen Umlenkung der Gasströmung oder eine Prallflächenanordnung. Derjenige Teil des Öls, der sich im Zyklon niederschlägt, gelangt unter Schwerkraftwirkung entlang der inneren Zyklonoberfläche als Kriechöl durch den geodätisch tiefsten Schlitz, auch während des Betriebes der zugehörigen Brennkraftmaschine, aus dem Ölnebelabscheider heraus und kann dann, wie der an der Öltropfen abscheidenden Struktur aus dem Gasstrom abgeschiedene Teil des Öls abgeführt und z.B. zum Kurbelgehäuse oder zur Ölwanne der zugehörigen Brennkraftmaschine geleitet werden. Bei geeigneter Wahl des Materials des Zyklonkörpers wird eine gute Adhäsion des kriechenden Öls erreicht, was dafür sorgt, dass das Öl von dem durch den unteren Schlitz einströmenden Gas nicht mitgerissen wird.

Auch für Ausführungen des Ölnebelabscheiders mit im Betrieb liegender Zyklonausrichtung wird vorgeschlagen, dass er mehrere parallelgeschaltete Zyklone umfasst und dass alle Gasauslässe in eine gemeinsame, Öltropfen abscheidende Struktur münden, die, vorzugsweise über einen Siphon oder ein Rückschlagventil, mit dem Kurbelgehäuse der Brennkraftmaschine verbunden ist.

Schließlich besteht eine weitere Maßnahme zur Erzielung einer kostengünstigen Fertigung des Ölnebelabscheiders in unterschiedlichen Ausführungen hinsichtlich seiner Kapazität darin, dass er vorteilhaft mehrere Zyklone aufweist und dass die Zyklonkörper aller Zyklone einzeln oder in Körpergruppen zu mehreren Zyklonkörpern als Gleichteile vorgefertigt und mit je einem eigenen Deckelteil oder mit je Körpergruppe einem Deckelteil oder einem für alle Zyklonkörper gemeinsamen Deckelteil verbunden sind. Auf diese Weise wird ein Baukastensystem ermöglicht, bei dem identische Zyklonkörper in der jeweils benötigten Anzahl in Anpassung an die zu verarbeitenden Mengen an Kurbelgehäuseentlüftungsgas in den jeweiligen Ölnebelabscheider eingesetzt werden.

Es besteht auch die Möglichkeit, in den erfindungsgemäßen Ölnebelabscheidern mit mehreren Zyklonen die Zyklone registerartig entsprechend dem aktuellen Volumenstrom an Kurbelgehäuseentlüftungsgas zu- und abzuschalten.

Bevorzugt ist der erfindungsgemäße Ölnebelabscheider im Automotive-Bereich einsetzbar, also für Brennkraftmaschinen von Kraftfahrzeugen, insbesondere von Personenkraftwagen.

Im Folgenden werden Ausführungsbeispiele der Erfindung anhand einer Zeichnung erläutert. Die Figuren der Zeichnung zeigen:
- Figur 1: einen Zyklon als Teil eines Ölnebelabscheiders in Ansicht mit einem abgenommenen Deckelteil,
- Figur 2: den Zyklon in der Ausführung gemäß Figur 1 mit angebautem Deckelteil, im Längsschnitt,
- Figur 3: den Zyklon aus Figur 2 im Querschnitt,
- Figur 4: einen weiteren Zyklon in Ansicht,
- Figur 5: den Zyklon aus Figur 4 in Längsschnitt,
- Figur 6: einen weiteren Zyklon in Längsschnitt,
- Figur 7: einen Ölnebelabscheider mit vier stehenden Zyklonen, in Ansicht,
- Figur 8: den Ölnebelabscheider aus Figur 7 in Längsschnitt,
- Figur 9: einen weiteren Ölnebelabscheider mit vier stehenden Zyklonen, in Ansicht,
- Figur 10: den Ölnebelabscheider aus Figur 9 im Längsschnitt,
- Figur 11: in Ölnebelabscheider aus Figur 9 und 10 im Querschnitt,
- Figur 12: einen Ölnebelabscheider mit einem liegenden Zyklon, im Längsschnitt,
- Figur 13: einen Ölnebelabscheider mit vier liegenden Zyklonen, in Ansicht,
- Figur 14: den Ölnebelabscheider aus Figur 13 im Längsschnitt,
- Figur 15: einen weiteren Ölnebelabscheider mit vier liegenden Zyklonen, in Ansicht, und
- Figur 16: den Ölnebelabscheider aus Figur 15 im Längsschnitt.

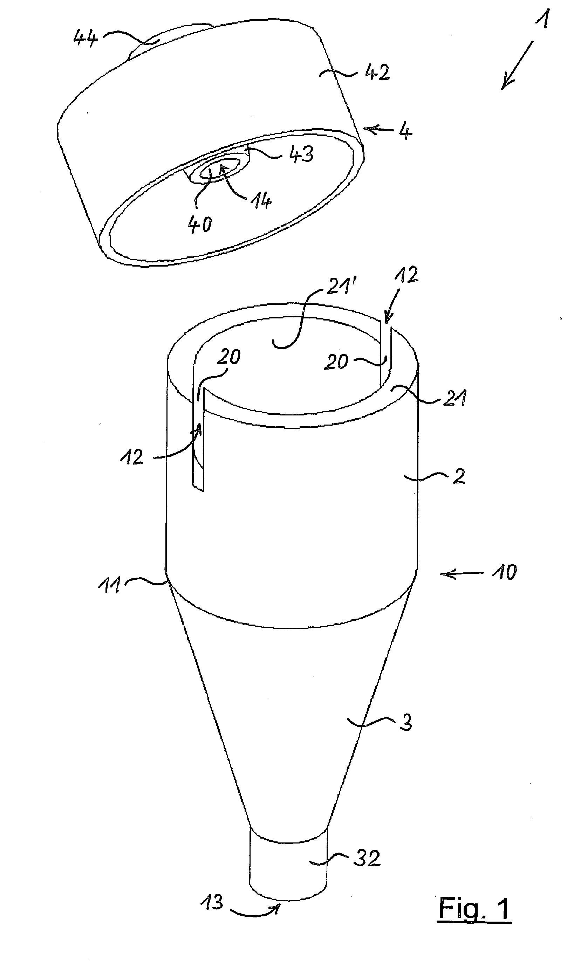

Figur 1 der Zeichnung zeigt ein erstes Ausführungsbeispiel eines stehenden Zyklons 10 als Ölnebelabscheider 1 oder Teil eines Ölnebelabscheiders 1.

Unter Zyklon soll hier vorzugsweise eine Vorrichtung verstanden werden, in der ein kreisrunder Hohlraum vorhanden ist, der in der Nähe seiner Basis (oben) eine oder mehrere tangentiale Einlässe sowie einen zentral und axial angeordneten Auslass aufweist, während in dem der Basis gegenüberliegenden Ende, d.h. im zugespitzten (unteren) Ende des kegelförmig gestalteten Raums eine oder mehrere Ableitungen vorhanden sind.

Der Zyklon 10 gemäß Figur 1 besteht aus zwei Teilen, nämlich dem Zyklonkörper 11 und dem Deckelteil 4, die miteinander in geeigneter Weise verbindbar sind. Der Zyklonkörper 11 hat ein Oberteil 2 mit einer Umfangswand 21 und einer zylindrischen Innenoberfläche 21' sowie ein Unterteil 3 mit einer konisch verlaufenden Umfangswand 31 und einem entsprechend konisch geformten Inneren. Am unteren Ende 32 des Unterteils 3 ist ein Ölauslass 13 vorgesehen.

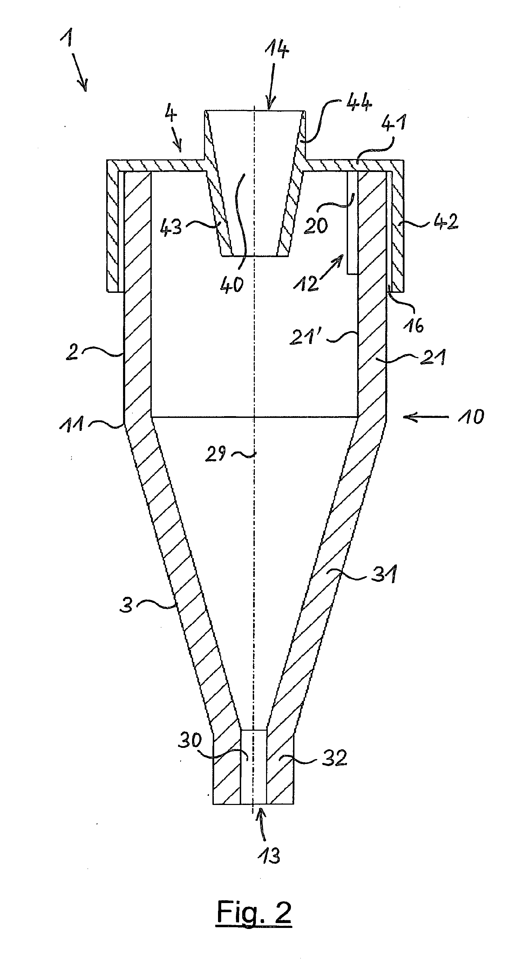

Oben am Oberteil 2 sind als Gaseinlass 12 zwei Schlitze 20 sichtbar, die durch die Umfangswand 21 des Oberteils 2 verlaufen und tangential zur inneren Oberfläche 21' in das Innere des Oberteils 2 einmünden. Jeder Schlitz 20 ist zunächst nach der Fertigung des Zyklonkörpers 11 als Einzelteil nach oben hin offen. Verschlossen wird der Schlitz 20 oberseitig erst durch den aufgesetzten Deckelteil 4, wie in Figur 2 gezeigt. Der Zyklonkörper 11 des Zyklons 10 gemäß Figur 1 kann mit einem einfachen zweiteiligen Werkzeug als Spritz- oder Druckgussteil gefertigt werden; ein Schieber für die Ausbildung der Schlitze 20 als Gaseinlass 12 wird hier nicht benötigt, weil die zunächst nach oben hin offenen Schlitze 20 zusammen mit dem Oberteil 2 des Zyklonkörpers 11 in Axialrichtung nach oben entformbar sind.

Oben in Figur 1 ist der noch nicht mit dem Zyklonkörper 11 verbundene Deckelteil 4 dargestellt, der mit einer Kappe 42 ausgebildet ist. In Zentrum des Deckelteils 4 ist von unten her ein den Gasauslass 14 umgrenzendes Tauchrohr 43 teilweise sichtbar, durch welches eine zentrale Durchbrechung 40 verläuft. Oberseitig ist am Deckelteil 4 ein Teil eines dort angeordneten Kragens 44 sichtbar.

Sobald der Deckelteil 4 auf das Oberteil 2 des Zyklonkörpers 11 aufgesetzt ist, sind die Schlitze 20 oberseitig verschlossen. Der Außendurchmesser des Oberteils 2 und der Innendurchmesser der Kappe 42 des Deckelteils 4 sind dabei so aufeinander abgestimmt, dass im zusammengebauten Zustand ein ausreichend großer Ringspalt dazwischen verbleibt, so dass zu entölendes Kurbelgehäuseentlüftungsgas von außerhalb des Zyklonkörpers 11 zu den Schlitzen 20 als Gaseinlass 12 strömen kann.

Figur 2 zeigt den Ölnebelabscheider 1 und den Zyklon 10 aus Figur 1 im Längsschnitt in zusammengebautem Zustand. Oben rechts in Figur 2 ist der eine der beiden den Gaseinlass 12 bildenden Schlitze 20 sichtbar, der nun oberseitig durch den Deckelteil 4 mit der Scheibe 41 verschlossen ist. Die Kappe 42 erstreckt sich von oben her über einen Teil der Höhe des Oberteils 2 und bildet mit diesem einen umlaufenden Ringspalt 16. Durch den Ringspalt 16 kann aus der Umgebung des Zyklonkörpers 11 ein Gas zum Gaseinlass 12 strömen, wobei die Schlitze 20 über ihre volle Höhe unter der Kappe 42 liegen.

Oberseitig ist das Oberteil 2 durch den Deckelteil 4 mit Ausnahme des Gasauslasses 14 in Form des die zentrale Durchbrechung 40 umgebenden Tauchrohrs 43 und oberseitigen Kragens 44 verschlossen.

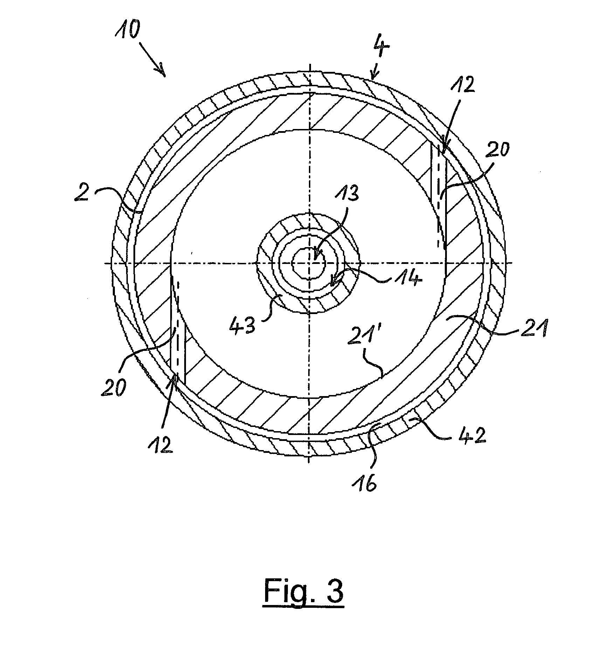

Die Figur 3 zeigt den Ölnebelabscheider 1 und den Zyklon 10 aus den Figuren 1 und 2 im Querschnitt in Höhe des Tauchrohrs 43 geschnitten. Radial außen ist die Kappe 42 geschnitten. Radial innen davon liegt der umlaufende Ringspalt 16. Daran schließt sich radial nach innen die Umfangswand 21 des Oberteils 2 an. Durch die Umfangswand 21 laufen einander diametral gegenüberliegend die zwei Schlitze 20 als Gaseinlass 12, die jeweils tangential zur inneren Oberfläche 21' der Umfangswand 21 in das Innere des Oberteils 2 münden. Im Zentrum der Figur 3 sind das Tauchrohr 43, der Ölauslass 13 und der Gasauslass 14 erkennbar.

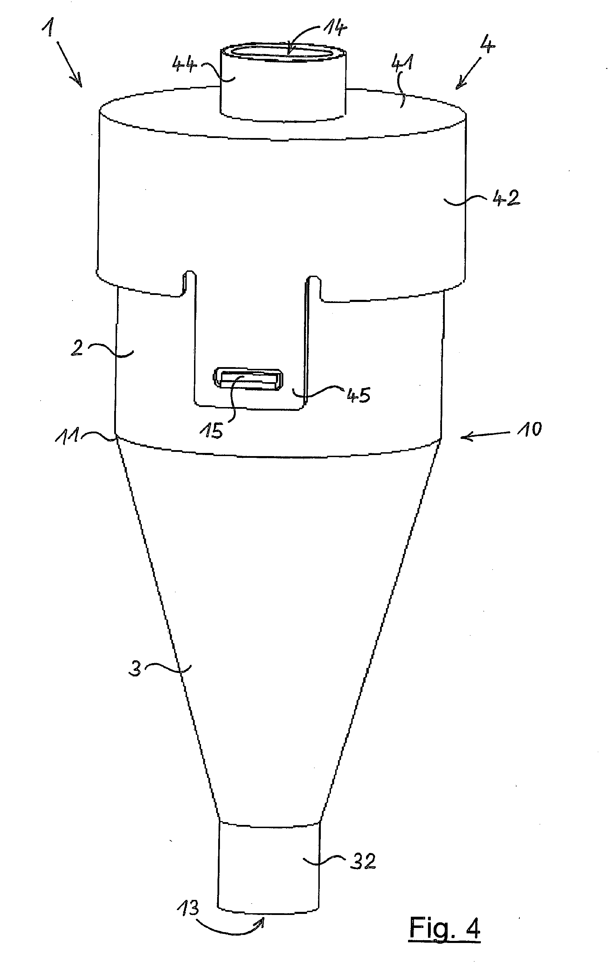

Figur 4 zeigt ein Beispiel eines Ölnebelabscheiders 1 mit einem Zyklon 10, bei dem der Deckelteil 4 mit dem Zyklonkörper 11 durch eine Klipsverbindung verbunden ist. Der Zyklonkörper 11 entspricht bei dem Beispiel nach Figur 4 der Ausführung in den Figuren 1 bis 3, auf deren Beschreibung verwiesen wird. Der Deckelteil 4 gemäß dem Beispiel nach Figur 4 besitzt einander gegenüber liegend zwei Klipslaschen 45, die sich von der Kappe 42 des Deckelteils 4 nach unten erstrecken, wobei in der Zeichnung nur eine Klipslasche 45 an der Vorderseite sichtbar ist. In passender Höhe sind auf dem Außenumfang des Oberteils 2 des Zyklonkörpers 11 einander gegenüberliegend zwei Klipsnasen 15 angeordnet, die in entsprechende Durchbrechungen in den Klipslaschen 45 des Deckelteil 4 eingreifen.

Alternativ zu der dargestellten Klipsverbindung können der Zyklonkörper 11 und der Deckelteil 4 auch miteinander verklebt oder verpresst oder verschweißt oder gegeneinander verspannt sein. Dabei ist eine absolute gegenseitige Dichtigkeit nicht nötig; kleine Spalte stören die Funktion nicht und können toleriert werden.

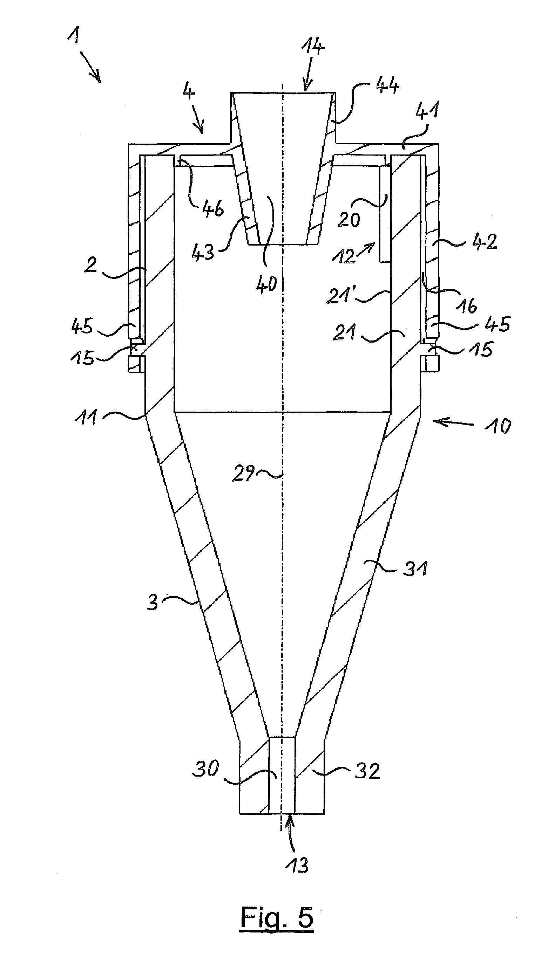

Der Ölnebelabscheider 1 aus Figur 4 ist in der Figur 5 im Längsschnitt durch die Klipslaschen 45 gezeigt. Auch hier besteht zwischen der Kappe 42 des Deckelteils 4 und dem Oberteil 2 der umlaufende Ringspalt 16 zur Zuführung des im Zyklon 10 zu behandelnden Gases. Jeweils links und rechts unten an der Kappe 42 liegen die beiden Klipslaschen 45, in die hier die Klipsnasen 15 des Oberteils 2 eingreifen. Zur Zentrierung des Deckelteils 4 relativ zu dem Oberteil 2 ist an der Unterseite der Scheibe 41 des Deckelteils 4 ein umlaufender Zentriersteg 46 vorgesehen. Im Übrigen entspricht der Zyklon 10 dem Beispiel gemäß den Figuren 1 bis 3, auf deren Beschreibung verwiesen wird.

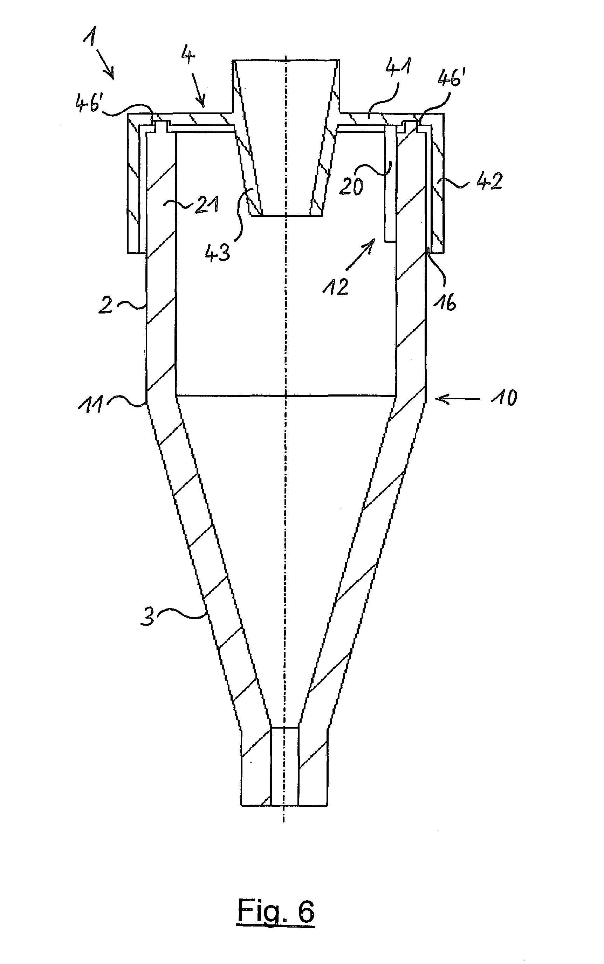

Figur 6 zeigt wieder im Längsschnitt eine geänderte Ausführung des Ölnebelabscheiders 1 und des Zyklon 10, welche die Verbindung des Oberteils 2 mit dem Deckelteil 4 betrifft. Der Deckelteil 4 besteht auch hier aus einer Scheibe 41 mit einer sich nach unten erstreckenden Kappe 42. Zur gewünschten relativen Positionierung von Kappe 42 und Oberteil 2 ist hier an der Unterseite der Scheibe 41 eine umlaufende Zentriernut 46' vorgesehen, in welche das obere, in seiner Dicke reduzierte Ende der Umfangswand 21 eingreift. Diese Ausgestaltung nach Figur 6 eignet sich besonders gut für eine Laserverschweißung zwischen Deckelteil 4 und Zyklonkörper 11, wobei zweckmäßig der Deckelteil 4 aus einem für Laserstrahlung durchsichtigen Material und der Zyklonkörper 11 aus einem Laserstrahlung absorbierenden Material besteht. Der schweißende Laserstrahl kann so problemlos von oben durch den Deckelteil 4 auf das obere Ende des Oberteils 2 geführt werden, um die Schweißverbindung zu erzeugen. Zur Vermeidung von Strömungsstörungen wird die Schweißverbindung im Bereich der Schlitze 20 zweckmäßig unterbrochen. Ansonsten entspricht der Zyklon gemäß Figur 6 dem Zyklon gemäß den Figuren 1 bis 3, auf deren Beschreibung verwiesen wird.

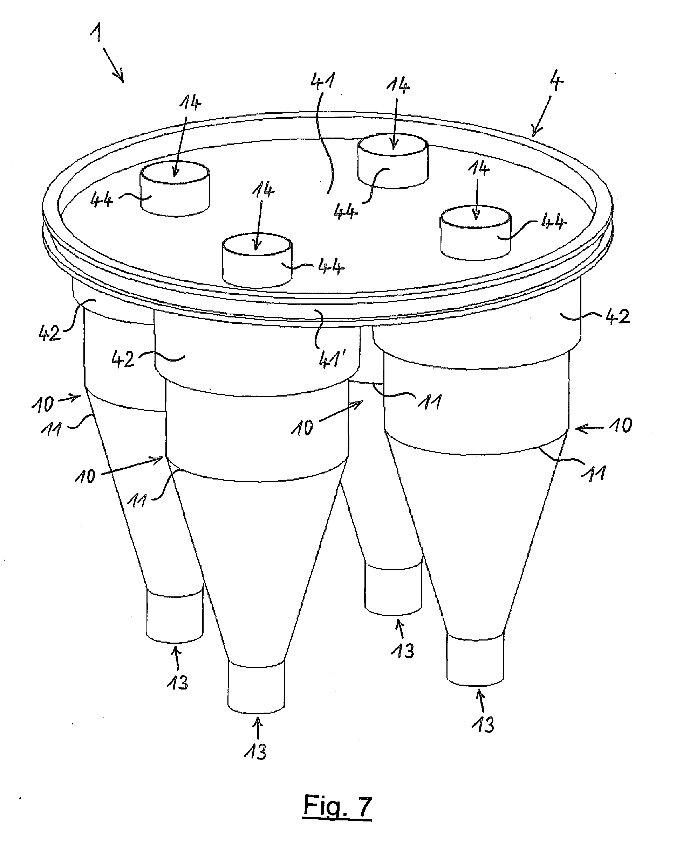

Bei den vorstehend beschriebenen Beispielen besteht der Ölnebelabscheider 1 jeweils aus einem einzelnen Zyklon 10. Insbesondere für die Abscheidung von feinem Ölnebel aus dem Kurbelgehäuseentlüftungsgas von Brennkraftmaschine hat sich die Verwendung von mehreren kleineren Zyklonen anstelle eines entsprechend größeren einzelnen Zyklons als vorteilhaft erwiesen. Ein Beispiel für einen Ölnebelabscheider 1 mit mehreren, hier vier, parallelen stehenden Zyklonen 10 zeigt die Figur 7. Die vier Zyklone 10 sind in einem Quadrat angeordnet und besitzen jeder einen eigenen, ein Einzelteil bildenden Zyklonkörper 11. Am unteren Ende jedes Zyklons 10 liegt wieder ein Ölauslass 13. Die Ölauslässe 13 können in einen gemeinsamen Ölsammelraum münden, der hier nicht dargestellt ist und der, vorzugsweise über einen Siphon oder ein Rückschlagventil, mit dem Kurbelgehäuse oder Ölsumpf der zugehörigen Brennkraftmaschine verbunden ist.

Die Zyklonkörper 11 sind mit einem gemeinsamen, einstückigen Deckelteil 4 verbunden, beispielsweise verschweißt. Der Deckelteil 4 besteht hier aus einer alle vier Zyklone 10 überdeckenden Scheibe 41, von deren Unterseite sich pro Zyklonkörper 11 eine Kappe 42 nach unten erstreckt. Jeweils in eine der Kappen 42 ist das Oberteil 2 eines Zyklonkörpers 11 eingesteckt. An der Oberseite der Scheibe 41 liegen die Gasauslässe 14 mit den über die Oberfläche der Scheibe 41 nach oben vorstehenden Kragen 44. An ihrem Außenumfang besitzt die Scheibe 41 eine umlaufende Dichtungsnut 41', in welche eine nicht gezeigte Dichtung einlegbar ist, um das Bauteil aus den vier Zyklonkörpern 11 und dem Deckelteil 4 dichtend in einer größeren Einheit, beispielsweise ein Ölmodul oder eine Zylinderkopfhaube einer Brennkraftmaschine, anbringen zu können.

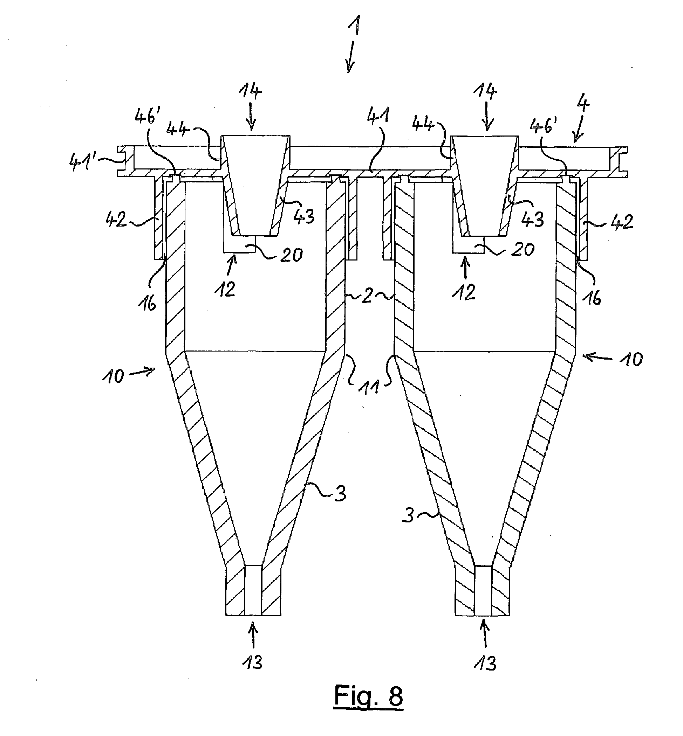

Figur 8 zeigt den Ölnebelabscheider 1 aus Figur 7 im Längsschnitt, wobei die Schnittebene mittig durch zwei benachbarte Zyklone 10 verläuft. Jeder Zyklonkörper 11 ist als Einzelteil mit Oberteil 2 und Unterteil 3 gefertigt und mit dem gemeinsamen Deckelteil 4 verbunden, hier im Bereich je einer umlaufenden Zentriernut 46' pro Zyklonkörper 11 mit der Unterseite des Deckelteils 4 verschweißt.

Der Deckelteil 4 ist durch eine entsprechend große Scheibe 41 gebildet. Mit dem Deckelteil 4 einstückig ausgebildet sind die sich nach unten erstreckenden Kappen 42, die jeweils mit dem Oberteil 2 des zugehörigen Zyklonkörpers 11 einen Ringspalt 16 bilden. Durch jeden Ringspalt 16 kann zu entölendes Kurbelgehäuseentlüftungsgas zu dem den Gaseinlass 12 bildenden Schlitz 20 innerhalb der Kappe 42 strömen. Ebenfalls einstückig mit dem Deckelteil 4 ist pro Zyklon 10 ein nach unten von der Scheibe 41 abragendes Tauchrohr 43 sowie als dessen Fortsetzung nach oben jeweils ein Kragen 44 ausgebildet. Das Verbinden zwischen jedem einzelnen Zyklonkörper 11 und dem gemeinsamen Deckelteil 4 erfolgt hier wieder zweckmäßig durch Laserschweißen von oben her durch die Scheibe 41 des Deckelteils 4 hindurch in Bereich der Zentriernuten 46'.

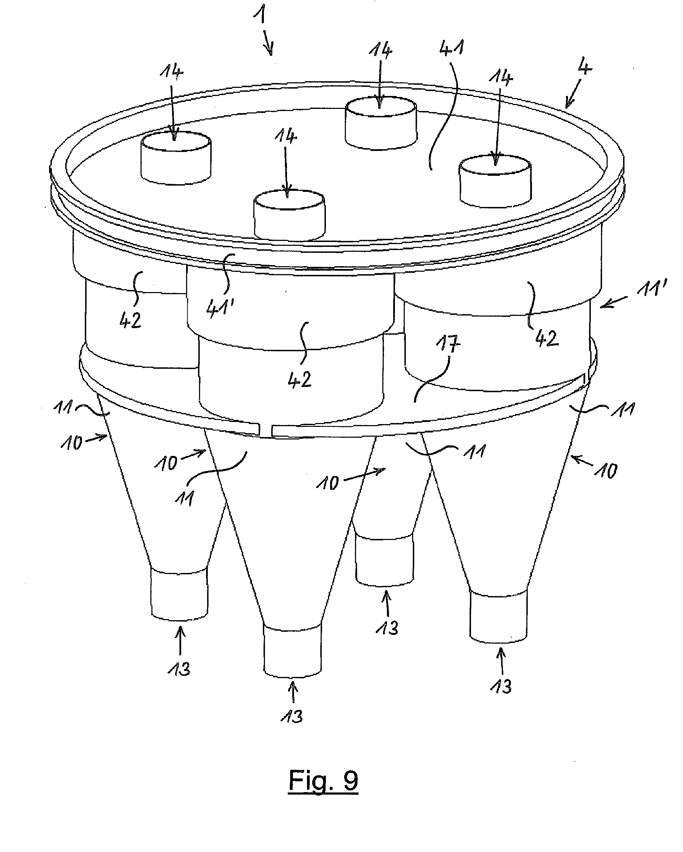

Figur 9 zeigt einen Ölnebelabscheider 1, der wie im vorhergehenden beschriebenen Beispiel nach Figur 8 vier parallele stehende Zyklone 10 in einer quadratischen Anordnung umfasst. Unterschiedlich zu dem Beispiel nach Figur 8 ist in Figur 9, dass die vier Zyklonkörper 11 zu einer einstückig gefertigten Zyklonkörpergruppe 11' zusammengefasst und dann als Einheit mit dem gemeinsamen Deckelteil 4 verbunden sind. Zum Zusammenfassen der Zyklonkörper 11 zu einem Bauteil dient ein scheibenförmiger Zyklonkörperträger 17, der mit allen Zyklonkörpern 11 zu dem einstückigen Bauteil zusammengefasst ist. Im Übrigen entspricht das Beispiel nach Figur 9 dem Beispiel nach den Figuren 7 und 8, auf deren Beschreibung verwiesen wird.

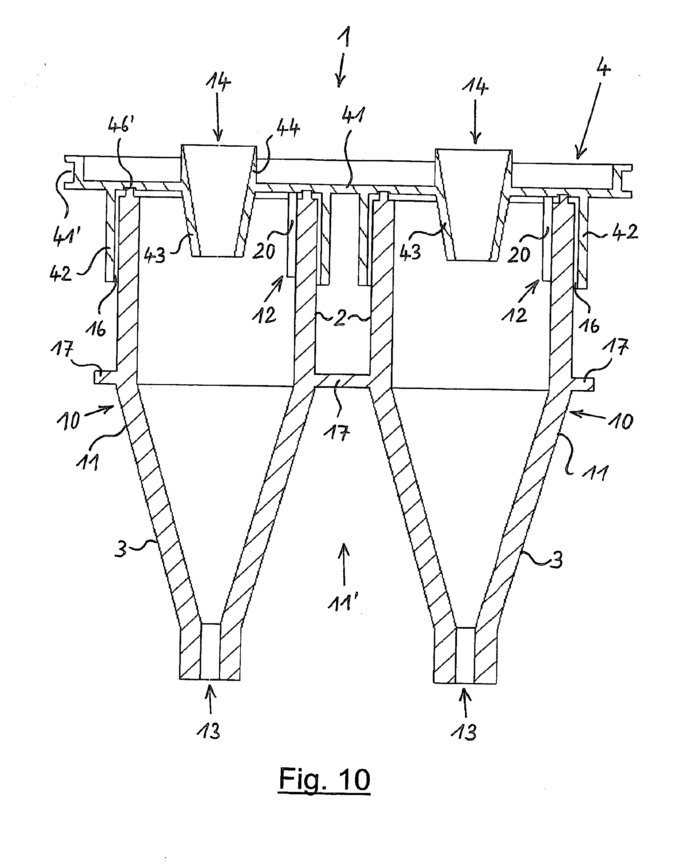

Figur 10 zeigt den Ölnebelabscheider 1 aus Figur 9 im Längsschnitt durch das Zentrum zweier benachbarter Zyklone 10. Im Zentrum der Figur 10 ist der Zyklonkörperträger 17 erkennbar, über den alle Zyklonkörper 11 zu einem gemeinsamen Bauteil in Form der Zyklonkörpergruppe 11' zusammengefasst sind. Wie Figur 10 anschaulich zeigt, kann die Zyklonkörpergruppe 11', ebenso wie der zuvor beschrieben einzelne Zyklonkörper 11, als einstückiges Spritz- oder Druckgussteil gefertigt werden. In Figur 10 ist die Zyklonkörpergruppe 11' wieder mit dem gemeinsamen Deckelteil 4 verschweißt, welches mit dem Deckelteil gemäß Figur 7 und 8 identisch ist. Hinsichtlich der weiteren Bezugsziffern in den Figuren 9 und 10 wird auf die vorhergehende Beschreibung verwiesen.

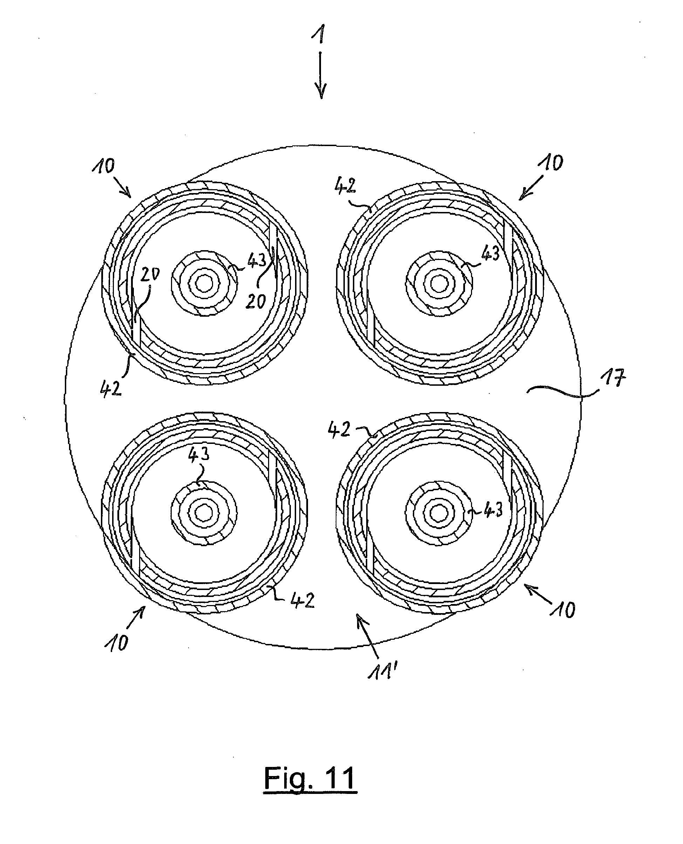

Figur 11 zeigt den Ölnebelabscheider 1 aus den Figuren 9 und 10 im Querschnitt in Höhe der Tauchrohre 43, wobei hier die Anordnung der Zyklone 10 in einem Quadrat besonders deutlich wird. Jeder Zyklon 10 ist radial außen von einer der Kappen 42 umgeben. Im Zentrum jedes Zyklon 10 ist jeweils das zugehörige Tauchrohr 43 geschnitten. Die Verbindung der Zyklone 10 miteinander zu der einstückigen Zyklonkörperbaugruppe 11' bildet der scheibenförmige Zyklonkörperträger 17. In seinem Aufbau entspricht jeder Zyklon 10 dem Beispiel gemäß Figur 3, auf deren Beschreibung verwiesen wird.

Bei den bis hierher beschriebenen Ölnebelabscheidern 1 waren ein oder mehrere stehende Zyklone 10 vorgesehen. Bei den nachfolgenden Beispielen sind die beschriebenen Ölnebelabscheider 1 mit einem oder mehreren liegenden Zyklonen ausgeführt.

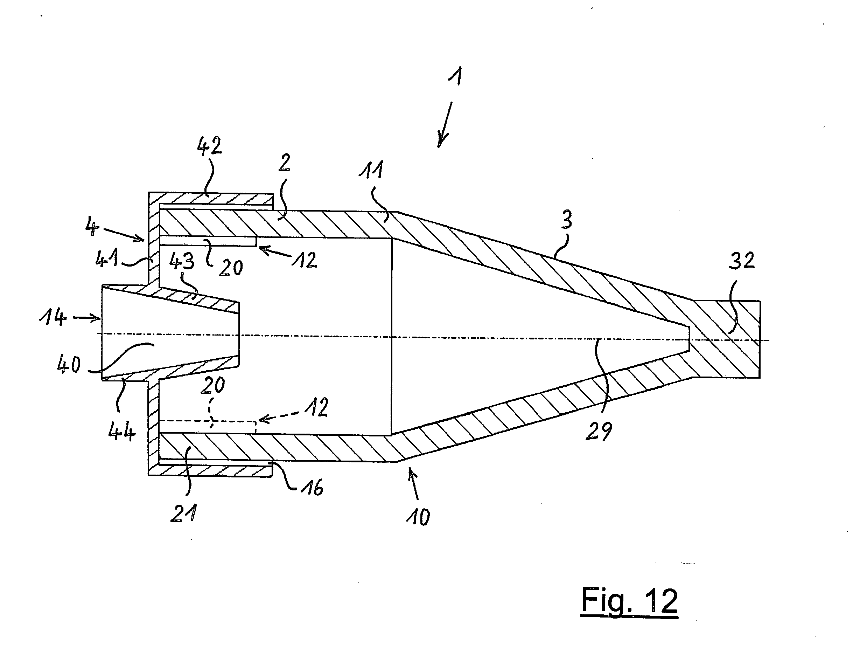

Figur 12 zeigt einen Ölnebelabscheider 1 mit einem liegenden Zyklon 10 im Längsschnitt, wobei der Zyklon 10 einen als Einzelteil gefertigten Zyklonkörper 11 aufweist. Im Oberteil 2 dieses Zyklons 10 sind einander diametral gegenüberliegend zwei Schlitze 20 als tangentiale Gaseinlässe 12 vorgesehen, wovon einer an der in Einbaulage geodätisch tiefsten Stelle des Zyklonkörpers 11 liegt. Da der untere Schlitz 20 vor der Schnittebene der Figur 12 liegt, ist er in gestrichelten Linien angedeutet.

Der Zyklonkörper 11 ist mit einem Deckelteil 4 verbunden, um den Ölnebelabscheider 1 zu bilden. Der Deckelteil 4 besitzt an seiner in Figur 12 infolge der liegenden Anordnung des Zyklons 10 nach rechts weisenden Unterseite eine Kappe 42, in welche der Zyklonkörper 11 eingesteckt ist. Die Verbindung zwischen dem Zyklonkörper 11 und dem Deckelteil 4 erfolgt auf oben schon genannte, geeignete Art und Weise.

Der Deckelteil 4 besteht auch hier wieder aus einer den Zyklon 10 überdeckenden Scheibe 41, von welcher an der nach außen, d.h. in Figur 12 nach links, weisenden Oberseite der Gasauslass 14 mit dem Kragen 44 vorragt. Im radial äußeren Bereich des Deckelteils 4 ist dieser mit dem übrigen Zyklon 10 verbunden. Nach innen ragt vom Deckelteil 4 das Tauchrohr 43 vor. Die durch das Tauchrohr 43 und den Kragen 44 begrenzte Öffnung 40 bildet den Gasauslass 14 des Zyklons 10.

Wesentlich ist bei dem liegenden Zyklon 10, dass dessen Ende 32, das hier wegen der liegenden Anordnung das von dem Deckelteil 4 entfernt liegende Ende ist, verschlossen ist, also keine Ölablauföffnung zur Bildung eines Ölauslasses aufweist.

Im Betrieb dieses Ölnebelabscheiders 1 wird Kurbelgehäuseentlüftungsgas durch die beiden tangentialen Einlässe 12 in Form der beiden Schlitze 20 in das Oberteil 2 des Zyklons 10 eingeleitet, wodurch im Zyklon 10 eine rotierende Strömung entsteht. Dabei werden in einem ersten Wirkeffekt als Ölnebel im Kurbelgehäuseentlüftungsgas mitgeführte feine Öltröpfchen in dem Zyklon 10 zu größeren Tropfen agglomeriert, die dann gemeinsam mit dem Gasstrom den Zyklon 10 durch den Gasauslass 14 verlassen.

An den Gasauslass 14 schließt sich eine die nun vorliegenden größeren Öltropfen aus dem Gasstrom abscheidende Struktur an, die hier nicht dargestellt ist und die für die letztendliche Trennung von Öl und Gas sorgt. Diese Struktur kann zum Beispiel ein Beruhigungsraum oder ein Gaskanal mit einem oder mehreren scharfen Richtungswechseln oder eine Prallflächenanordnung oder eine Kombination daraus sein, wie sie an sich bekannt sind. Zur Rückführung des abgeschiedenen Öls ist diese Struktur zweckmäßig über einen Siphon oder ein Ventil mit dem Ölsumpf der Brennkraftmaschine verbunden.

Gleichzeitig findet in diesem liegenden Zyklon 10 ein zweiter Ölabscheideeffekt statt, bei dem infolge der Fliehkraft Öl auf der inneren Oberfläche des Zyklonkörpers 11 niedergeschlagen wird, also hier schon aus dem Gasstrom entfernt wird. Dieses niedergeschlagene Öl kriecht unter Schwerkraftwirkung entlang der inneren Oberfläche des Zyklonkörpers 11 zu dem geodätisch tiefsten Schlitz 20 und gelangt durch diesen aus dem Zyklon 10 heraus und kann dann in das Kurbelgehäuse der Brennkraftmaschine zurückgeführt werden.

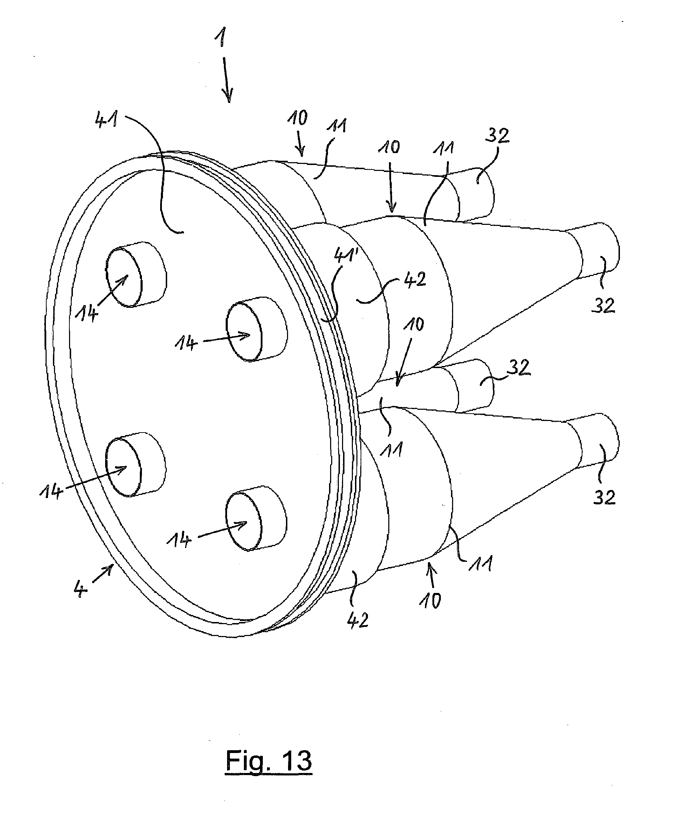

Im Beispiel nach Figur 13 sind vier Zyklone 10 parallel zueinander liegend angeordnet, wobei jeder Zyklon 10 einen eigenen, als Einzelteil gefertigten Zyklonkörper 11 aufweist. Im Oberteil 2 jedes Zyklons 10 sind, was hier nicht sichtbar ist, einander diametral gegenüberliegend zwei Schlitze als tangentiale Gaseinlässe vorgesehen, wovon einer an der in Einbaulage geodätisch tiefsten Stelle des Zyklonkörpers 11 liegt.

Die Zyklonkörper 11 sind mit einem gemeinsamen Deckelteil 4 verbunden, um den Ölnebelabscheider 1 zu bilden. Der Deckelteil 4 besitzt an seiner in Figur 13 infolge der liegenden Anordnung der Zyklone 10 nach rechts weisenden Unterseite vier Kappen 42, in welche jeweils ein Zyklonkörper 11 eingesteckt ist. Die Verbindung zwischen jedem Zyklonkörper 11 und dem gemeinsamen Deckelteil 4 erfolgt auf oben schon genannte, geeignete Art und Weise.

Der Deckelteil 4 besteht auch hier wieder aus einer entsprechend großen, alle Zyklone 10 überdeckenden Scheibe 41, von welcher an einer dem Betrachter zugewandten Oberseite jeweils ein Gasauslass 14 mit dem Kragen 44 vorragt. Am radial äußeren Umfang des Deckelteils 4 ist wieder eine Dichtungsnut 41' zur Aufnahme eines Dichtringes vorgesehen.

Wesentlich ist bei den liegenden Zyklonen 10, dass jeweils deren von dem Deckelteil 4 entfernt liegende Ende 32, das hier wegen der liegenden Anordnung nun nicht mehr das untere Ende ist, verschlossen ist, also keine Ölablauföffnung zur Bildung eines Ölauslasses aufweist.

Im Betrieb dieses Ölnebelabscheiders 1 werden als Ölnebel im Kurbelgehäuseentlüftungsgas mitgeführte feine Öltröpfchen in den Zyklonen 10 zu größeren Tropfen agglomeriert, die dann gemeinsam mit dem Gasstrom die Zyklone 10 durch den jeweiligen Gasauslass 14 verlassen. An die Gasauslässe 14 schließt sich eine, vorzugsweise gemeinsame, die nun vorliegenden größeren Öltropfen aus dem Gasstrom abscheidende Struktur an, die hier nicht dargestellt ist und die für die letztendliche Trennung von Öl und Gas sorgt. Diese Struktur kann zum Beispiel ein Beruhigungsraum oder ein Gaskanal mit einem scharfen Richtungswechsel sein. Zur Rückführung des abgeschiedenen Öls ist diese Struktur zweckmäßig über einen Siphon oder ein Ventil mit dem Ölsumpf der Brennkraftmaschine verbunden.

Auch hier findet gleichzeitig in den liegenden Zyklonen 10 der zweite Ölabscheideeffekt statt, bei dem infolge der Fliehkraft Öl auf der inneren Oberfläche jedes Zyklonkörpers 11 niedergeschlagen wird, also aus dem Gasstrom entfernt wird. Dieses niedergeschlagene Öl kriecht unter Schwerkraftwirkung entlang der inneren Oberfläche jedes Zyklonkörpers 11 zu dem geodätisch tiefsten Schlitz 20 und gelangt durch diesen aus dem Zyklon 10 heraus und kann dann in das Kurbelgehäuse der Brennkraftmaschine zurückgeführt werden.

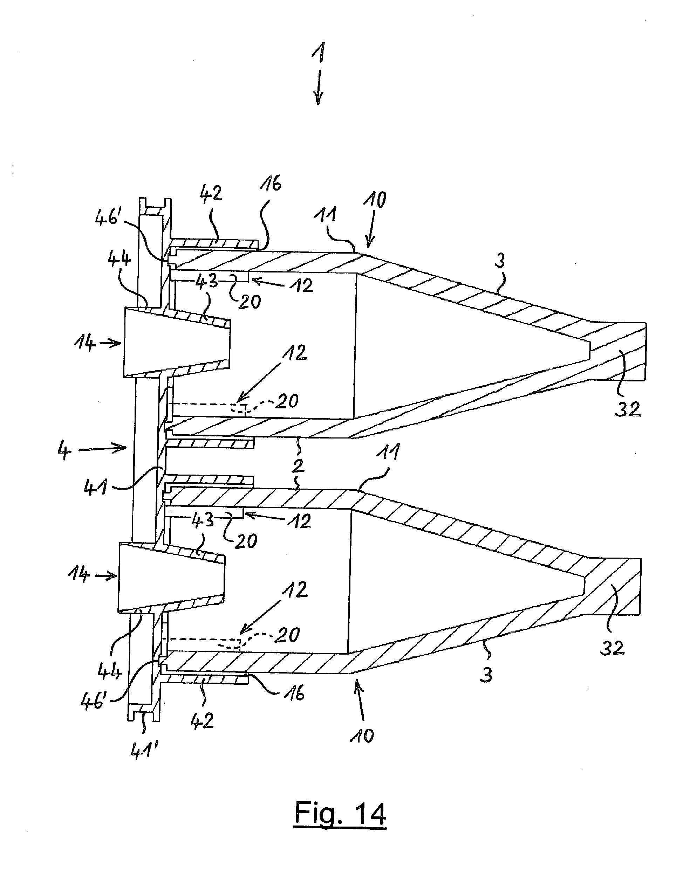

Figur 14 zeigt den Ölnebelabscheider 1 aus Figur 13 in einem vertikalen Längsschnitt. Die Anordnung entspricht zum Teil dem Beispiel nach Figur 8, mit dem Unterschied, dass in Figur 14 die Anordnung um 90° gegen den Uhrzeigersinn gedreht ist, so dass sich eine liegende Anordnung der Zyklone 10 ergibt. Unterschiedlich ist außerdem, dass die Enden 32 der Zyklonkörper 11 verschlossen sind und dass jeweils im Oberteil 2 jedes Zyklons 10 einander diametral gegenüberliegend zwei Schlitze 20 als tangentiale Gaseinlässe 12 vorgesehen sind, wovon jeweils einer an der in Einbaulage geodätisch tiefsten Stelle des zugehörigen Zyklonkörpers 11 liegt. Da jeweils der untere Schlitz 20 vor der Schnittebene der Figur 14 liegt, ist er in gestrichelten Linien angedeutet.

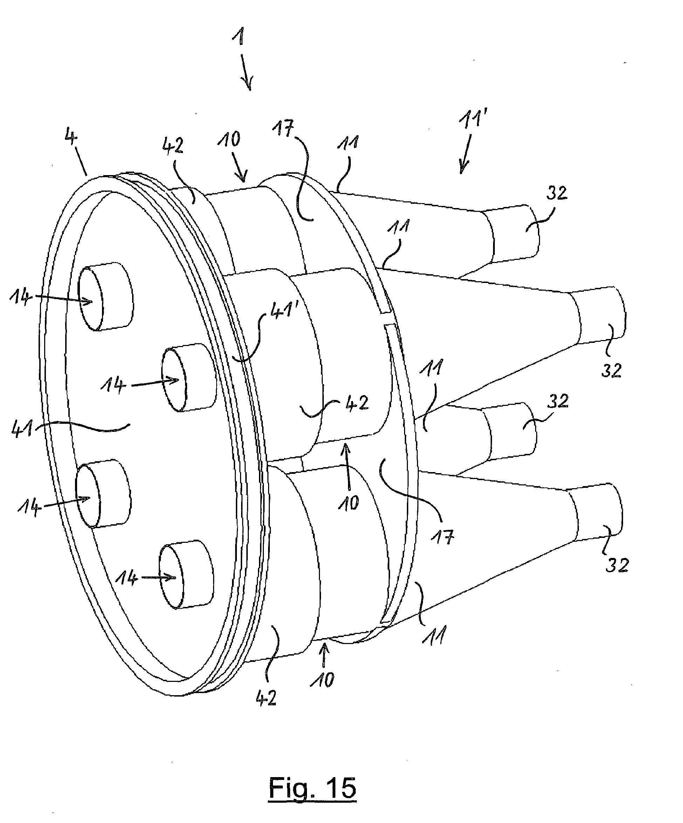

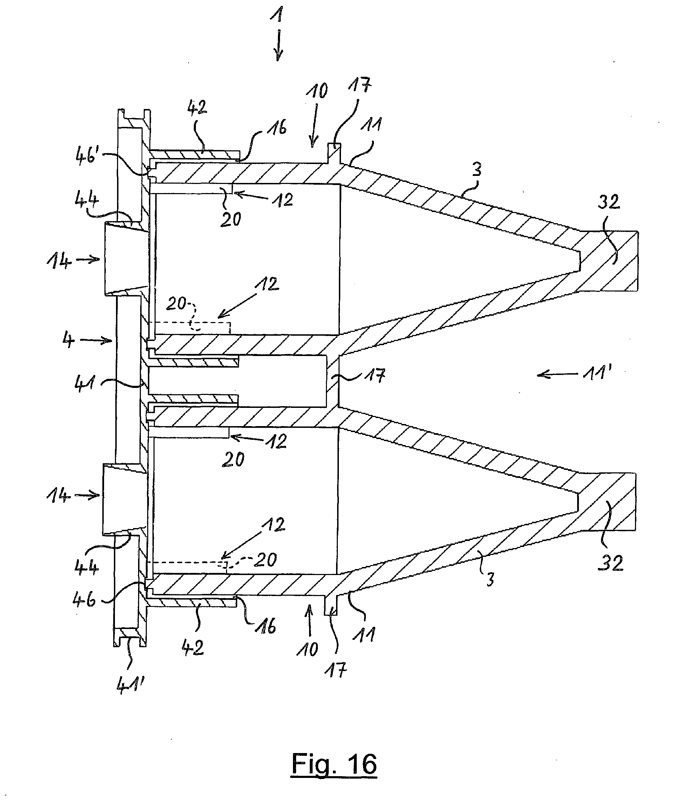

Als letztes Beispiel ist in den Figuren 15 und 16 ein Ölnebelabscheider 1 gezeigt, der, wie das vorhergehende Beispiel, vier parallele liegende Zyklone 10 umfasst. Unterschiedlich ist bei dem Beispiel nach den Figuren 15 und 16, dass nun die Zyklonkörper 11 aller Zyklone 10 zu einer einstückigen Zyklonkörpergruppe 11' zusammengefasst sind. Zur einstückigen Verbindung der Zyklonkörper 11 miteinander dient wieder ein scheibenförmiger Zyklonkörperträger 17, der in der Spritzwerkzeug-Trennebene liegt.

Weiterhin ist hier die Zyklonkörpergruppe 11' als ein Bauteil mit dem gemeinsamen Deckelteil 4 verbunden. Damit entspricht die Darstellung in Figur 16 zum Teil dem Beispiel nach Figur 10 mit dem Unterschied, dass in Figur 16 die Anordnung wieder um 90° gegen den Uhrzeigersinn gedreht ist, um die Zyklone 10 in eine liegende Ausrichtung zu bringen. Außerdem sind nun auch wieder die Enden 32 der Unterteile 3 der Zyklonkörper 11 dicht verschlossen und es sind je Zyklon zwei Schlitze 20 als Gaseinlässe 12 vorgesehen. Ein weiterer Unterschied besteht darin, dass nun die Zyklone 10 ohne Tauchrohr ausgeführt sind, um den gewünschten Austrag von agglomerierten, größeren Öltropfen aus den Zyklonen 10 durch den jeweiligen Gasauslass 14 zu erleichtern. Die Funktion des Ölnebelabscheiders 1 gemäß Figur 15 und 16 entspricht ansonsten der zuvor beschriebenen Funktion des Ölnebelabscheiders 1 gemäß den Figuren 12, 13 und 14.

**Bezugszeichenliste:**

| Zeichen | Bezeichnung |
|---|---|
| 1 | Ölnebelabscheider |
| 10 | Zyklon |
| 11 | Zyklonkörper |
| 11' | Zyklonkörpergruppe |
| 12 | Gaseinlass |
| 13 | Ölauslass |
| 14 | Gasauslass |
| 15 | Klipsnasen |
| 16 | Ringspalt zwischen 2 und 42 |
| 17 | Zyklonkörperträger |
| | |
| 2 | Oberteil von 11 |
| 20 | Schlitz |
| 21 | Umfangswand von 2 |
| 21' | innere Oberfläche von 21 |
| 22 | Verdickung/Fortsetzung an 21 |
| 29 | Mittelachse von 2 |
| | |
| 3 | Unterteil von 11 |
| 30 | Ölablauföffnung |
| 31 | Umfangswand von 3 |
| 32 | unteres Ende von 3 |
| | |
| 4 | Deckelteil |
| 40 | zentrale Durchbrechung in 4 |
| 41 | Scheibe |
| 41' | Dichtungsnut |
| 42 | Kappe |
| 43 | Tauchrohr |
| 44 | Kragen |
| 45 | Klipslaschen |
| 46 | Zentriersteg an 41 |
| 46' | Zentriernut an 41 |
| l | Länge von 20 |
| w | Weite von 20 |
| d | Dicke von 21 |

## Patentansprüche

1. Ölnebelabscheider (1) für das Kurbelgehäuseentlüftungsgas einer Brennkraftmaschine, insbesondere eines Kraftfahrzeuges, wobei der Ölnebelabscheider (1) wenigstens einen Zyklon (10) aufweist, der aus einem Zyklonkörper (11) mit einem Oberteil (2) mit einem zylindrischen Inneren und mit einem Unterteil (3) mit einem konischen Inneren und aus einem das Oberteil (2) abdeckenden Deckelteil (4) besteht, wobei in dem Oberteil (2) ein Gaseinlass (12) vorgesehen ist, wobei durch den Deckelteil (4) ein Gasauslass (14) verläuft, wobei der Gaseinlass (12) als mindestens ein zur Oberseite des Oberteils (2) hin offener und oberseitig durch den Deckelteil (4) begrenzter, tangential zu einer inneren Oberfläche (21') des Oberteils (2) in dieses einmündender, durch eine Umfangswand (21) des Oberteils (2) geführter Schlitz (20) ausgebildet ist und wobei eine von einer Mittelachse (29) des Oberteils (2) ausgehende gedachte Radiuslinie unter jedem Umfangswinkel, auch im Bereich des/jedes Schlitzes (20), immer auf die Umfangswand (21) trifft,
**dadurch gekennzeichnet,**
**dass** der Deckelteil (4) mit einer sich über zumindest einen Teil der Höhe des Oberteils (2) unter Ausbildung eines Ringspalts (16) erstreckenden Kappe (42) ausgeführt ist und dass die Kappe (42) sich in Axialrichtung gesehen mindestens so weit erstreckt, dass sie den/jeden Gaseinlass (12) vollständig überdeckt, wobei zu entölendes Kurbeigehäuseentlüftungsgas von außerhalb des Zyklon körpers (11) durch den Ringspalt (16) zu dem mindestens einen Schlitz (20) strömen kann.

2. Ölnebelabscheider nach Anspruch 1, **dadurch gekennzeichnet, dass** der Ringspalt (16) in Radialrichtung gesehen eine mittlere Weite zwischen 0,5 und 2,0 mm aufweist.

3. Ölnebelabscheider nach Anspruch 1 oder 2, **dadurch gekennzeichnet, dass** die Umfangswand (21) in Radialrichtung des Oberteils (2) gesehen eine Dicke (d) aufweist, die mindestens so groß ist wie eine Weite (w) des Schlitzes (20).

4. Ölnebelabscheider nach einem der Ansprüche 1 bis 3, **dadurch gekennzeichnet, dass** der/jeder Schlitz (20) mit einer für eine ausreichende Gleichrichtung des Gasstroms ausreichenden Länge (1) ausgeführt ist.

5. Ölnebelabscheider nach einem der Ansprüche 1 bis 4, **dadurch gekennzeichnet, dass** das Verhältnis einer/der Länge (I) des Schlitzes (20) zu einer/der Weite (w) des Schlitzes (20) größer als 1,5 ist.

6. Ölnebelabscheider nach einem der Ansprüche 1 bis 5, **dadurch gekennzeichnet, dass** der/jeder Schlitz (20) über seine gesamte mittlere Länge (I) in der Umfangswand (21) verläuft.

7. Ölnebelabscheider nach einem der Ansprüche 1 bis 6, **dadurch gekennzeichnet, dass** das Verhältnis einer/der Länge (I) des Schlitzes (20) zu einer/der Dicke (d) der Umfangswand (21) größer als 1,85 ist.

8. Ölnebelabscheider nach einem der Ansprüche 1 bis 7, **dadurch gekennzeichnet, dass** der/jeder Schlitz (20) geradlinig durch die Umfangswand (21) verläuft.

9. Ölnebelabscheider nach einem der Ansprüche 1 bis 7, **dadurch gekennzeichnet, dass** der/jeder Schlitz (20) gebogen mit gleicher Krümmungsrichtung wie die Umfangswand (21) durch diese verläuft.

10. Ölnebelabscheider nach einem der Ansprüche 1 bis 9, **dadurch gekennzeichnet, dass** in der Umfangswand (21) in deren Umfangsrichtung gesehen voneinander, vorzugsweise gleichmäßig, beabstandet zwei oder mehr, vorzugsweise bis zu sechs, Schlitze (20) vorgesehen sind.

11. Ölnebelabscheider nach einem der Ansprüche 1 bis 10, **dadurch gekennzeichnet, dass** im Deckelteil (4) als Gasauslass (14) eine zentrale Durchbrechung (40) angeordnet ist.

12. Ölnebelabscheider nach einem der Ansprüche 1 bis 11, **dadurch gekennzeichnet, dass** der Deckelteil (4) mit einem in das Oberteil (2) ragenden Tauchrohr (43) als Gasauslass (14) ausgeführt ist.

13. Ölnebelabscheider nach einem der Ansprüche 1 bis 12, **dadurch gekennzeichnet, dass** der Gasauslass (14) einen oberseitig am Deckelteil (4) angeordneten Kragen (44) oder Rohrabschnitt aufweist.

14. Ölnebelabscheider nach einem der Ansprüche 1 bis 13, **dadurch gekennzeichnet, dass** der Zyklonkörper (11) und der Deckelteil (4) zur gegenseitigen Verbindung miteinander verklipst oder verklebt oder verpresst oder vierschweißt oder gegeneinander verspannt sind.

15. Ölnebelabscheider nach einem der Ansprüche 1 bis 14, **dadurch gekennzeichnet, dass** im Einbauzustand der Zyklon (10) stehend angeordnet ist und dass am unteren Ende (32) des Unterteils (3) eine Ölablauföffnung (30) vorgesehen ist.

16. Ölnebelabscheider nach Anspruch 15, **dadurch gekennzeichnet, dass** er mehrere parallelgeschaltete Zyklone (10) umfasst und dass alle Ölablauföffnungen (30) in einen gemeinsamen Ölsammelraum münden, der, vorzugsweise über einen Siphon oder ein Rückschlagventil, mit dem Kurbelgehäuse der Brennkraftmaschine verbunden ist.

17. Ölnebelabscheider nach einem der Ansprüche 1 bis 14, **dadurch gekennzeichnet, dass** im Einbauzustand der Zyklon (10) liegend angeordnet ist, dass wenigstens zwei Schlitze (20) in der Umfangswand (21) vorgesehen sind, wovon ein Schlitz (20) an einer geodätisch tiefsten Stelle des liegenden Zyklons angeordnet ist, dass das Ende (32) des Unterteils (3) verschlossen ist, dass im Betrieb der Brennkraftmaschine Gas und im Zyklon (10) agglomerierte Öltropfen durch den Gasauslass (14) abführbar sind, dass dem Gasauslass (14) des Zyklons (10) eine Öltropfen abscheidende Struktur nachgeordnet ist und dass im Zyklon (10) niedergeschlagenes Öl durch den geodätisch tiefsten Schlitz (20) mittels Schwerkraftwirkung abführbar ist.

18. Ölnebelabscheider nach Anspruch 17, **dadurch gekennzeichnet, dass** er mehrere parallelgeschaltete Zyklone (10) umfasst und dass alle Gasauslässe (14) in eine gemeinsame, Öltropfen abscheidende Struktur münden, die, vorzugsweise über einen Siphon oder ein Rückschlagventil, mit dem Kurbelgehäuse der Brennkraftmaschine verbunden ist.

19. Ölnebelabscheider nach einem der Ansprüche 1 bis 18, **dadurch gekennzeichnet, dass** er mehrere Zyklone (10) aufweist und dass die Zyklonkörper (11) aller Zyklone (10) einzeln oder in Körpergruppen (11') zu mehreren Zyklonkörpern (11) als Gleichteile vorgefertigt und mit je einem eigenen Deckelteil (4) oder mit je Körpergruppe (11') einem Deckelteil (4) oder einem für alle Zyklon körper (10) des Ölnebelabscheiders (1) gemeinsamen Deckelteil (4) verbunden sind.

## Claims

1. An oil mist separator (1) for the crankcase ventilation gas of an internal combustion engine, in particular of a motor vehicle, wherein the oil mist separator (1) encompasses at least one cyclone (10), which consists of a cyclone body (11) with an upper part (2) comprising a cylindrical interior and with a lower part (3) comprising a conical interior and of a cover part (4), which covers the upper part (2), wherein provision is made in the upper part (2) for a gas inlet (12), wherein a gas outlet (14) runs through the cover part (4), wherein the gas inlet (12) is embodied as at least one slot (20), which is open towards the upper side of the upper part (2) and is bounded on the upper side by the cover part (4), leads into the upper part (2) tangentially to an inner surface (21') thereof, is guided through a peripheral wall (21) of the upper part (2), and wherein an imaginary radius line, which proceeds from a center axis (29) of the upper part (2), always hits the peripheral wall (21) at any peripheral angle, including in the area of the/each slot (20),
**characterized in**
**that** the cover part (4) is embodied with a cap (42), which extends at least across a part of the height of the upper part (2) by forming a ring gap (16), and in that the cap (42), viewed in axial direction, extends at least so far that it completely covers the/each gas inlet (12), wherein crankcase ventilation gas, from which oil is to be removed, can flow from outside of the cyclone body (11) through the ring gap (16) to the at least one slot (20).

2. The oil mist separator according to claim 1, **characterized in that** the ring gap (16), viewed in radial direction, encompasses an average width of between 0,5 and 2,0 mm.

3. The oil mist separator according to claim 1 or 2, **characterized in that** the peripheral wall (21), viewed in radial direction of the upper part (2), encompasses a thickness (d), which is at least as large as the width (w) of the slot (20).

4. The oil mist separator according to any one of claims 1 to 3, **characterized in that** the/each slot (20) is embodied with a length (I), which is sufficient for a sufficient alignment of the gas flow.

5. The oil mist separator according to any one of claims 1 to 4, **characterized in that** the ratio of a/the length (I) of the slot (20) to a/the width (w) of the slot (20) is larger than 1,5.

6. The oil mist separator according to any one of claims 1 to 5, **characterized in that** the/each slot (20) runs within the peripheral wall (21) across its entire middle length (I).

7. The oil mist separator according to any one of claims 1 to 6, **characterized in that** the ratio of a/the length (I) of the slot (20) to a/the thickness (d) of the peripheral wall (21) is larger than 1,85.

8. The oil mist separator according to any one of claims 1 to 7, **characterized in that** the/each slot (20) runs linearly through the peripheral wall (21).

9. The oil mist separator according to any one of claims 1 to 7, **characterized in that** the/each slot (20) runs through the peripheral wall (21) in a curved manner with the same direction of curvature as said peripheral wall (21).

10. The oil mist separator according to any one of claims 1 to 9, **characterized in that** provision is made in the peripheral wall (21) in the peripheral direction thereof, spaced apart from one another, preferably evenly, for two or more, preferably for up to six, slots (20).

11. The oil mist separator according to any one of claims 1 to 10, **characterized in that** a central through hole (40) is arranged in the cover part (4) as gas outlet (14).

12. The oil mist separator according to any one of claims 1 to 11, **characterized in that** the cover part (4) is embodied with an immersion pipe (43) as gas outlet (14), which protrudes into the upper part (2).

13. The oil mist separator according to any one of claims 1 to 12, **characterized in that** the gas outlet (14) encompasses a collar (44) or pipe section, which is arranged on the upper side of the cover part (4).

14. The oil mist separator according to any one of claims 1 to 13, **characterized in that** the cyclone body (11) and the cover part (4) are clipped, adhered or pressed or welded or braced against one another so as to be interconnected.

15. The moil mist separator according to any one of claims 1 to 14, **characterized in that**, in the installed state, the cyclone (10) is arranged vertically and **in that** provision is made on the lower end (32) of the lower part (3) for an oil discharge opening (30).

16. The oil mist separator according to claim 15, **characterized in that** it comprises a plurality of cyclones (10), which are connected in parallel, and **in that** all of the oil discharge openings (30) lead into a common oil collection chamber, which is connected to the crankcase of the internal combustion engine, preferably via a siphon or a non-return valve.

17. The oil mist separator according to any one of claims 1 to 14, **characterized in that**, in the installed state, the cyclone (10) is arranged horizontally, that provision is made in the peripheral wall (21) for at least two slots (20), of which one slot (20) is arranged at a geodetically lowest location of the horizontally arranged cyclone, that the end (32) of the lower part (3) is closed, that gas and drops of oil agglomerated in the cyclone (10) can be discharged through the gas outlet (14) during the operation of the internal combustion engine, that a structure, which separates drops of oil, is arranged downstream from the gas outlet (14) of the cyclone (10), and that oil, which settles in the cyclone (10), can be discharged through the geodetically lowest slot (20) by means of the force of gravity.

18. The oil mist separator according to claim 17, **characterized in that** it comprises a plurality of cyclones (10), which are connected in parallel, and that all of the gas outlets (14) lead into a common structure, which separates drops of oil and which is connected to the crankcase of the internal combustion engine, preferably via a siphon or non-return valve.

19. The oil mist separator according to any one of claims 1 to 18, **characterized in that** it encompasses a plurality of cyclones (10) and that the cyclone bodies (11) of all of the cyclones (10) are prefabricated individually or in body groups (11') as equivalent parts to form a plurality of cyclone bodies (11) and are each connected to their own cover part (4) or each body group (11') to one cover part (4) or to a cover part (4), which is shared by all of the cyclone bodies (10) of the oil mist separator (1).

## Revendications

1. Séparateur de vapeur d'huile (1) pour le gaz de purge de vilebrequin d'un moteur à combustion interne, notamment d'un véhicule automobile, dans lequel le séparateur de vapeur d'huile (1) présente au moins un cyclone (10) qui se compose d'un corps de cyclone (11) avec une partie supérieure (2) avec un intérieur cylindrique et avec une partie inférieure (3) avec un intérieur conique et d'une partie de couvercle (4) recouvrant la partie supérieure (2), dans lequel une entrée de gaz (12) est prévue dans la partie supérieure (2), dans lequel une sortie de gaz (14) s'étend à travers la partie de couvercle (4), dans lequel l'entrée de gaz (12) est réalisée en tant qu'au moins une fente (20) ouverte vers le côté supérieur de la partie supérieure (2) et limitée du côté supérieur par la partie de couvercle (4), débouchant de manière tangentielle à une surface interne (21') de la partie supérieure (2) dans celle-ci, guidée à travers une paroi périphérique (21) de la partie supérieure (2) et dans lequel une ligne de rayon imaginaire partant d'un axe médian (29) de la partie supérieure (2) sous chaque angle périphérique, même dans la région de la/chaque fente (20), tombe toujours sur la paroi périphérique (21),
**caractérisé en ce**
**que** la partie de couvercle (4) est réalisée avec un capuchon (42) s'étendant sur au moins une partie de la hauteur de la partie supérieure (2) en formant un passage annulaire (16) et que le capuchon (42) s'étend vu en direction axiale au moins aussi loin qu'il recouvre entièrement la/chaque entrée de gaz (12), dans lequel du gaz de purge de vilebrequin à déshuiler peut s'écouler de l'extérieur du corps de cyclone (11) à travers l'espace annulaire (16) vers l'au moins une fente (20).

2. Séparateur de vapeur d'huile selon la revendication 1, **caractérisé en ce que** l'espace annulaire (16) présente vu en direction radiale une largeur moyenne comprise entre 0,5 et 2,0 mm.

3. Séparateur de vapeur d'huile selon la revendication 1 ou 2, **caractérisé en ce que** la paroi périphérique (21) présente vue dans la direction radiale de la partie supérieure (2) une épaisseur (d) qui est au moins aussi grande qu'une largeur (w) de la fente (20).

4. Séparateur de vapeur d'huile selon l'une quelconque des revendications 1 à 3, **caractérisé en ce que** la/chaque fente (20) est réalisée avec une longueur (I) suffisant à un alignement suffisant du courant de gaz.

5. Séparateur de vapeur d'huile selon l'une quelconque des revendications 1 à 4, **caractérisé en ce que** le rapport entre une/la longueur (I) de la fente (20) et une/la largeur (w) de la fente (20) est supérieur à 1,5.

6. Séparateur de vapeur d'huile selon l'une quelconque des revendications 1 à 5, **caractérisé en ce que** la/chaque fente (20) s'étend sur sa longueur centrale entière (I) dans la paroi périphérique (21).

7. Séparateur de vapeur d'huile selon l'une quelconque des revendications 1 à 6, **caractérisé en ce que** le rapport entre une/la longueur (I) de la fente (20) et une/l'épaisseur (d) de la paroi périphérique (21) est supérieur à 1,85.

8. Séparateur de vapeur d'huile selon l'une quelconque des revendications 1 à 7, **caractérisé en ce que** la/chaque fente (20) s'étend en ligne droite à travers la paroi périphérique (21).

9. Séparateur de vapeur d'huile selon l'une quelconque des revendications 1 à 7, **caractérisé en ce que** la/chaque fente (20) s'étend de manière courbée avec une direction de courbure identique à la paroi périphérique (21) à travers celle-ci.

10. Séparateur de vapeur d'huile selon l'une quelconque des revendications 1 à 9, **caractérisé en ce que** deux fentes (20) ou plus, de préférence jusqu'à six, écartées l'une de l'autre, de préférence régulièrement, sont prévues dans la paroi périphérique (21) vue dans sa direction périphérique.

11. Séparateur de vapeur d'huile selon l'une quelconque des revendications 1 à 10, **caractérisé en ce qu'**un orifice traversant central (40) est disposé dans la partie de couvercle (4) en tant que sortie de gaz (14).

12. Séparateur de vapeur d'huile selon l'une quelconque des revendications 1 à 11, **caractérisé en ce que** la partie de couvercle (4) est réalisée avec un tube plongeur (43) dépassant dans la partie supérieure (2) en tant que sortie de gaz (14).

13. Séparateur de vapeur d'huile selon l'une quelconque des revendications 1 à 12, **caractérisé en ce que** la sortie de gaz (14) présente une collerette (44) ou section de tuyau disposée du côté supérieur sur la partie de couvercle (4).

14. Séparateur de vapeur d'huile selon l'une quelconque des revendications 1 à 13, **caractérisé en ce que** le corps de cyclone (11) et la partie de couvercle (4) sont encliquetés ou collés ou comprimés ou soudés ensemble ou gauchis l'un contre l'autre pour la connexion mutuelle.

15. Séparateur de vapeur d'huile selon l'une quelconque des revendications 1 à 14, **caractérisé en ce que** le cyclone (10) est disposé debout à l'état monté et qu'une ouverture d'évacuation d'huile (30) est prévue à l'extrémité inférieure (32) de la partie inférieure (3).

16. Séparateur de vapeur d'huile selon la revendication 15, **caractérisé en ce qu'**il comprend plusieurs cyclones (10) montés en parallèle et que toutes les ouvertures d'évacuation d'huile (30) débouchent dans un espace collecteur d'huile commun qui est relié au vilebrequin du moteur à combustion interne, de préférence par le biais d'un siphon ou d'une soupape anti-retour.

17. Séparateur de vapeur d'huile selon l'une quelconque des revendications 1 à 14, **caractérisé en ce que** le cyclone (10) est disposé couché à l'état monté, qu'au moins deux fentes (20) sont prévues dans la paroi périphérique (21) parmi lesquelles une fente (20) est disposée à un endroit le plus profond du point de vue géodésique du cyclone couché, que l'extrémité (32) de la partie inférieure (3) est fermée, qu'en fonctionnement du moteur à combustion interne, du gaz et des gouttes d'huile agglomérées dans le cyclone (10) peuvent être évacués à travers la sortie de gaz (14), qu'une structure séparant des gouttes d'huile est disposée en aval de la sortie de gaz (14) du cyclone (10) et que de l'huile précipitant dans le cyclone (10) peut être évacuée à travers la fente (20) la plus profonde du point de vue géodésique au moyen de l'action de la pesanteur.

18. Séparateur de vapeur d'huile selon la revendication 17, **caractérisé en ce qu'**il comprend plusieurs cyclones (10) montés en parallèle et que toutes les sorties de gaz (14) débouchent dans une structure commune séparant des gouttes d'huile qui est reliée au vilebrequin du moteur à combustion interne, de préférence par le biais d'un siphon ou d'une soupape anti-retour.

19. Séparateur de vapeur d'huile selon l'une quelconque des revendications 1 à 18, **caractérisé en ce qu'**il présente plusieurs cyclones (10) et que les corps de cyclone (11) de tous les cyclones (10) sont préfabriqués individuellement ou en groupes de corps (11') à plusieurs corps de cyclone (11) en tant que pièces identiques et reliés à une partie de couvercle propre (4) chacun ou à une partie de couvercle (4) par groupe de corps (11') ou à une partie de couvercle commune (4) pour tous les corps de cyclone (10) du séparateur de vapeur d'huile (1).
